# EUROPEAN PATENT SPECIFICATION

(11) **EP 4 154 451 B1**
(45) Date of publication and mention of the grant of the patent: **20.11.2024**
(21) Application number: 21751608.7
(22) Date of filing: 01.06.2021
(51) Int. Cl.: H04L 1/12, H04L 1/18

(54) **APPARATUS AND METHOD OF WIRELESS COMMUNICATION**
VORRICHTUNG UND VERFAHREN ZUR DRAHTLOSEN KOMMUNIKATION
APPAREIL ET PROCÉDÉ DE COMMUNICATION SANS FIL

(30) Priority: 02.06.2020 EP 20305579
(43) Date of publication of application: 29.03.2023
(73) Proprietor: Guangdong OPPO Mobile Telecommunications Corp., Ltd., Wusha, Chang'an Dongguan Guangdong 523860 (CN)
(72) Inventor: LIN, Hao, 92200 Neuilly-sur-Seine (FR)
(74) Representative: Taor, Simon Edward William
(86) International application number: PCT/IB2021/054775
(87) International publication number: WO 2021/245540

(56) References cited:
- WO-A1-2020/022523
- WO-A1-2020/090366

## Description

### BACKGROUND OF DISCLOSURE

### 1. Field of the Disclosure

The present disclosure relates to the field of communication systems, and more particularly, to an apparatus and a method of wireless communication, which can provide a good communication performance and/or high reliability.

### 2. Description of the Related Art

In an unlicensed band, an unlicensed spectrum is a shared spectrum. Communication equipment in different communication systems can use the unlicensed spectrum as long as the unlicensed meets regulatory requirements set by countries or regions on a spectrum. There is no need to apply for a proprietary spectrum authorization from a government.

In order to allow various communication systems that use the unlicensed spectrum for wireless communication to coexist friendly in the spectrum, some countries or regions specify regulatory requirements that must be met to use the unlicensed spectrum. For example, a communication device follows a listen before talk (LBT) or channel access procedure, that is, the communication device needs to perform a channel sensing before transmitting a signal on a channel. When an LBT outcome illustrates that the channel is idle, the communication device can perform signal transmission; otherwise, the communication device cannot perform signal transmission. In order to ensure fairness, once a communication device successfully occupies the channel, a transmission duration cannot exceed a maximum channel occupancy time (MCOT). LBT mechanism is also called a channel access procedure. In new radio (NR) Release 16, there are different types of channel access procedures, e.g., type 1, type 2A, type 2B and type 2C channel access procedures as described in TS 37.213.

For operation in a shared spectrum, an acknowledgement of a configured PDSCH transmission from a user equipment (UE), e.g., semi-persistent scheduled (SPS) PDSCH, is still an open issue.

Therefore, there is a need for an apparatus and a method of wireless communication, which can solve issues in the prior art, provide a method to determine an acknowledgement of a downlink channel in an uplink transmission, provide a good communication performance and/or high reliability.

WO 2020/022523 A1 discloses the adjustment of the contention window in the channel access procedure based on the feedback received from the UE, aiming to optimize the communication process. These methods and configurations enhance the efficiency and reliability of communication between base stations and user equipment in wireless networks.

WO 2020/090366 discloses procedures and configurations involved in the transmission and reception of control information, particularly related to Hybrid Automatic Repeat Request (HARQ) feedback. The document outlines methods and setups for terminal devices (likely mobile phones or other user equipment) and base stations to exchange control information efficiently. Specifically, it discusses the timing and configuration of monitoring opportunities for receiving control signals, the generation and transmission of HARQ-ACK codebooks, and the handling of Dynamic Allocation Index (DAI) fields within control channels.

### SUMMARY

The invention is defined by the subject matter of the independent claims. Advantageous enhancements are subject to the dependent claims.

### BRIEF DESCRIPTION OF DRAWINGS

In order to illustrate the embodiments of the present disclosure or related art more clearly, the following figures will be described in the embodiments are briefly introduced. It is obvious that the drawings are merely some embodiments of the present disclosure, a person having ordinary skill in this field can obtain other figures according to these figures without paying the premise.
FIG. 1 is a block diagram of one or more user equipments (UEs) and a base station (e.g., gNB) of communication in a communication network system according to an embodiment of the present disclosure.
FIG. 2 is a flowchart illustrating a method of wireless communication performed by a user equipment (UE) according to an embodiment of the present disclosure.
FIG. 3 is a flowchart illustrating a method of wireless communication performed by a base station according to an embodiment of the present disclosure.
FIG. 4 is a block diagram of a system for wireless communication according to an embodiment of the present disclosure.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

For uplink transmissions or downlink transmissions in a shared spectrum, a user equipment (UE) or a gNB may perform a channel access procedure before transmitting one or more uplink transmissions or one or more downlink transmissions in a channel. The channel access procedure comprises sensing a channel to determine whether the channel is idle or busy. Optionally, a channel access procedure may comprise at least a type 1 channel access according to section 4.2.1.1 of TS37.213, or a type 2A channel access according to section 4.2.1.2.1 of TS37.213, or a type 2B channel access according to section 4.2.1.2.2 of TS37.213, or a type 2C channel access according to section 4.2.1.2.3 of TS37.213. For operation in a shared spectrum, a UE may be configured to receive a physical downlink shared channel (PDSCH) transmission, while the UE needs to report an acknowledgement of the configured PDSCH transmission, e.g., semi-persistent scheduled (SPS) PDSCH is still an open issue. Some embodiments of the present disclosure solve this issue.

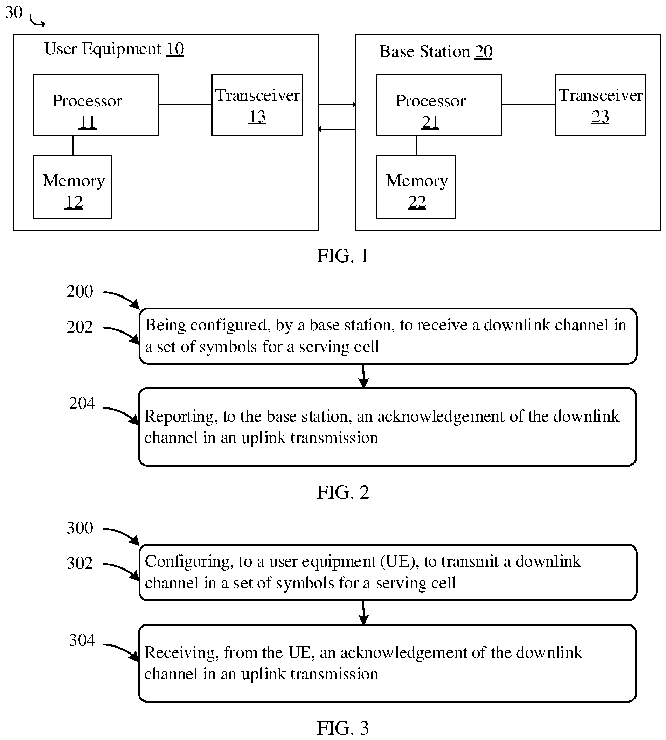

FIG. 1 illustrates that, in some embodiments, one or more user equipments (UEs) 10 and a base station (e.g., gNB) 20 for transmission adjustment in a communication network system 30 according to an embodiment of the present disclosure are provided. The communication network system 30 includes the one or more UEs 10 and the base station 20. The one or more UEs 10 may include a memory 12, a transceiver 13, and a processor 11 coupled to the memory 12 and the transceiver 13. The base station 20 may include a memory 22, a transceiver 23, and a processor 21 coupled to the memory 22 and the transceiver 23. The processor 11 or 21 may be configured to implement proposed functions, procedures and/or methods described in this description. Layers of radio interface protocol may be implemented in the processor 11 or 21. The memory 12 or 22 is operatively coupled with the processor 11 or 21 and stores a variety of information to operate the processor 11 or 21. The transceiver 13 or 23 is operatively coupled with the processor 11 or 21, and the transceiver 13 or 23 transmits and/or receives a radio signal.

The processor 11 or 21 may include application-specific integrated circuit (ASIC), other chipset, logic circuit and/or data processing device. The memory 12 or 22 may include read-only memory (ROM), random access memory (RAM), flash memory, memory card, storage medium and/or other storage device. The transceiver 13 or 23 may include baseband circuitry to process radio frequency signals. When the embodiments are implemented in software, the techniques described herein can be implemented with modules (e.g., procedures, functions, and so on) that perform the functions described herein. The modules can be stored in the memory 12 or 22 and executed by the processor 11 or 21. The memory 12 or 22 can be implemented within the processor 11 or 21 or external to the processor 11 or 21 in which case those can be communicatively coupled to the processor 11 or 21 via various means as is known in the art.

In some embodiments, the processor 11 is configured, by the base station 20, to receive a downlink channel in a set of symbols for a serving cell. The processor 11 is configured to report, to the base station 20, an acknowledgement of the downlink channel in an uplink transmission. This can solve issues in the prior art, provide a method to determine an acknowledgement of a downlink channel in an uplink transmission, provide a good communication performance and/or high reliability.

In some embodiments, the processor 21 is configured to configure, to the UE 10, to transmit a downlink channel in a set of symbols for a serving cell. The transceiver 23 is configured to receive, from the UE 10, an acknowledgement of the downlink channel in an uplink transmission. This can solve issues in the prior art, provide a method to determine an acknowledgement of a downlink channel in an uplink transmission, provide a good communication performance and/or high reliability.

FIG. 2 illustrates a method 200 of wireless communication by a user equipment (UE) according to an embodiment of the present disclosure. In some embodiments, the method 200 includes: a block 202, being configured, by a base station, to receive a downlink channel in a set of symbols for a serving cell, and a block 204, reporting, to the base station, an acknowledgement of the downlink channel in an uplink transmission. This can solve issues in the prior art, provide a method to determine an acknowledgement of a downlink channel in an uplink transmission, provide a good communication performance and/or high reliability.

FIG. 3 illustrates a method 300 of wireless communication by a base station according to an embodiment of the present disclosure. In some embodiments, the method 300 includes: a block 302, configuring, to a user equipment (UE), to transmit a downlink channel in a set of symbols for a serving cell and a block 304, receiving, from the UE, an acknowledgement of the downlink channel in an uplink transmission. This can solve issues in the prior art, provide a method to determine an acknowledgement of a downlink channel in an uplink transmission, provide a good communication performance and/or high reliability.

In some embodiments, in a new radio-based access to a unlicensed spectrum or shared spectrum (NRU), when a user equipment (UE) is configured, by a network such as a base station, for a serving cell to receive a PDSCH in a set of symbols, the UE reports an acknowledgement of the PDSCH in a PUCCH transmission. This can solve issues in the prior art, provide a method to determine an acknowledgement of a downlink channel in an uplink transmission, provide a good communication performance and/or high reliability.

In some embodiments, the downlink channel comprises a physical downlink shared channel (PDSCH). In some embodiments, the uplink transmission comprises a physical uplink control channel (PUCCH) transmission. In some embodiments, the downlink channel is configured in a new radio-based access to a unlicensed spectrum or shared spectrum, and/or the uplink transmission is reported in the new radio-based access to the unlicensed spectrum or shared spectrum. In some embodiments, the PDSCH comprises a semi-persistent scheduled (SPS) PDSCH. In some embodiments, the acknowledgement of the downlink channel comprises a hybrid automatic repeat request-acknowledgement (HARQ-ACK) information corresponding to the PDSCH. In some embodiments, the PDSCH corresponds to a HARQ process number and a transport block. In some embodiments, the set of symbols are within a channel occupancy of the serving cell.

In some embodiments, the channel occupancy of the serving cell is indicated by at least one of the followings: a downlink control information (DCI) format 2_0 or a semi-static channel occupancy. In some embodiments, an indication field in the DCI format 2_0 comprises at least one of the followings: a resource block (RB) set indicator, a slot format indicator (SFI) index, a channel occupancy duration, or a search space set group switching field. In some embodiments, the indication field in the DCI format 2_0 is used to indicate the channel occupancy of the serving cell. In some embodiments, the semi-static channel occupancy indicates the channel occupancy of the serving cell. In some embodiments, the semi-static channel occupancy is configured by a first radio resource control (RRC) parameter. In some embodiments, the HARQ-ACK information comprises an ACK or a negative-acknowledgement (NACK).

In some embodiments, the acknowledgement of the downlink channel comprises the HARQ-ACK information corresponding to the PDSCH when a first condition is met. In some embodiments, the first condition comprises at least of the followings: wherein the set of symbols are within the channel occupancy of the serving cell, the set of symbols are indicated as downlink, the UE is not configured to monitor the DCI format 2_0, the DCI format 2_0 excludes a first indication field, or the UE is configured with a second RRC parameter. In some embodiments, the first indication field comprises at least one of the followings: the RB set indicator, the SFI index, the channel occupancy duration, or the search space set group switching field. In some embodiments, the SFI index is used to indicate that the set of symbols are downlink, uplink, or flexible.

In some embodiments, the acknowledgement of the downlink channel comprises the NACK corresponding to the PDSCH when a second condition is met. In some embodiments, the second condition comprises at least one of the followings: wherein at least one symbol of the set of symbols is outside the channel occupancy of the serving cell, at least one symbol of the set of symbols is indicated as uplink or flexible, the UE is not configured to monitor the DCI format 2_0, the DCI format 2_0 excludes the first indication field, the UE is not configured to monitor the DCI format 2_0, the DCI format 2_0 excludes the first indication field, or the UE is configured by a third RRC parameter.

In some embodiments, the second RRC parameter is used to indicate that the first condition is met. In some embodiments, the third RRC parameter is used to indicate the second condition is met. In some embodiments, the PUCCH carriers the acknowledgement of the downlink channel. In some embodiments, the PUCCH carriers a HARQ-ACK codebook, and the HARQ-ACK codebook comprises the acknowledgement of the downlink channel. In some embodiments, the HARQ-ACK codebook comprises at least one of the followings: a type 1 HARQ-ACK codebook, a type 2 HARQ-ACK codebook, a type 2 HARQ-ACK codebook with grouping, or a type 3 HARQ-ACK codebook. Optionally, the HARQ-ACK codebook comprises at least one of the followings: the type 1 HARQ-ACK codebook according to section 9.1.2 of technical specification (TS) 38.213, the type 2 HARQ-ACK codebook according to section 9.1.3 of TS38.213, the type 2 HARQ-ACK codebook with grouping according to section 9.1.3 of TS38.213, or the type 3 HARQ-ACK codebook according to section 9.1.4 of TS38.213.

Commercial interests for some embodiments are as follows. 1. Solving issues in the prior art. 2. Providing a method to determine an acknowledgement of a downlink channel in an uplink transmission. 3. Reducing signaling overhead. 4. Providing a good communication performance. 5. Providing a high reliability. 6. Some embodiments of the present disclosure are used by 5G-NR chipset vendors, V2X communication system development vendors, automakers including cars, trains, trucks, buses, bicycles, moto-bikes, helmets, and etc., drones (unmanned aerial vehicles), smartphone makers, communication devices for public safety use, AR/VR device maker for example gaming, conference/seminar, education purposes. Some embodiments of the present disclosure are a combination of "techniques/processes" that can be adopted in 3GPP specification to create an end product. Some embodiments of the present disclosure could be adopted in the 5G NR unlicensed band communications. Some embodiments of the present disclosure propose technical mechanisms.

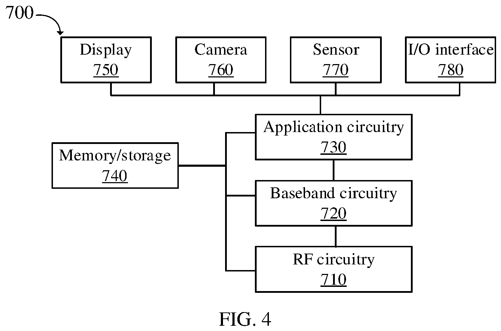

FIG. 4 is a block diagram of an example system 700 for wireless communication according to an embodiment of the present disclosure. Embodiments described herein may be implemented into the system using any suitably configured hardware and/or software. FIG. 4 illustrates the system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated. The application circuitry 730 may include a circuitry such as, but not limited to, one or more single-core or multi-core processors. The processors may include any combination of general-purpose processors and dedicated processors, such as graphics processors, application processors. The processors may be coupled with the memory/storage and configured to execute instructions stored in the memory/storage to enable various applications and/or operating systems running on the system.

The baseband circuitry 720 may include circuitry such as, but not limited to, one or more single-core or multi-core processors. The processors may include a baseband processor. The baseband circuitry may handle various radio control functions that enables communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multimode baseband circuitry.

In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency. The RF circuitry 710 may enable communication with wireless networks using modulated electromagnetic radiation through a non-solid medium. In various embodiments, the RF circuitry may include switches, filters, amplifiers, etc. to facilitate the communication with the wireless network. In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the user equipment, eNB, or gNB may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules. In some embodiments, some or all of the constituent components of the baseband circuitry, the application circuitry, and/or the memory/storage may be implemented together on a system on a chip (SOC). The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory.

In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface. In various embodiments, the sensor 770 may include one or more sensing devices to determine environmental conditions and/or location information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite.

In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, an AR/VR glasses, etc. In various embodiments, system may have more or less components, and/or different architectures. Where appropriate, methods described herein may be implemented as a computer program. The computer program may be stored on a storage medium, such as a non-transitory storage medium.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan. A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms. The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

Although the invention has been explained in relation to its preferred embodiment(s) as mentioned above, it is to be understood that many other possible modifications and variations can be made without departing from the scope of the present invention, which is defined by the claims.

## Claims

1. A method for wireless communication, performed by a user equipment, UE, **characterized in that** the method comprises:
(202) being configured, by a base station, to receive a downlink channel in a set of symbols for a serving cell; and
(204) reporting, to the base station, an acknowledgement of the downlink channel in an uplink transmission,
wherein the set of symbols are within a channel occupancy of the serving cell,
wherein the channel occupancy of the serving cell is indicated by at least one of the followings: a downlink control information, DCI, format 2_0 or a semi-static channel occupancy.

2. The method of claim 1, wherein at least one of the following applies:
the downlink channel comprises a physical downlink shared channel, PDSCH;
the uplink transmission comprises a physical uplink control channel, PUCCH, transmission;
the downlink channel is configured in a new radio-based access to a unlicensed spectrum or shared spectrum; or
the uplink transmission is reported in the new radio-based access to the unlicensed spectrum or shared spectrum.

3. The method of claim 2, wherein at least one of the following applies:
the PDSCH comprises a semi-persistent scheduled, SPS, PDSCH;
the acknowledgement of the downlink channel comprises a hybrid automatic repeat request-acknowledgement, HARQ-ACK, information corresponding to the PDSCH, the HARQ-ACK information comprising an ACK or a negative-acknowledgement, NACK; or
the PDSCH corresponds to a HARQ process number and a transport block.

4. The method of any one of claims 1 to 3, wherein at least one of the following applies:
an indication field in the DCI format 2_0 comprises at least one of the followings: a resource block, RB, set indicator, a slot format indicator, SFI, index, a channel occupancy duration, or a search space set group switching field, and the indication field in the DCI format 2_0 indicates the channel occupancy of the serving cell; or
the semi-static channel occupancy indicates the channel occupancy of the serving cell, and is configured by a first radio resource control, RRC, parameter.

5. The method of claim 3, wherein the acknowledgement of the downlink channel comprises the HARQ-ACK information corresponding to the PDSCH when a first condition is met.

6. The method of claim 5, wherein the first condition comprises at least of the followings:
wherein the set of symbols are within the channel occupancy of the serving cell, the set of symbols are indicated as downlink, the UE is not configured to monitor the DCI format 2_0, the DCI format 2_0 excludes a first indication field, or the UE is configured with a second RRC parameter.

7. A method for wireless communication, performed by a base station, **characterized in that** the method comprises:
transmitting a downlink channel in a set of symbols for a serving cell to a user equipment, UE; and
receiving (304), from the UE, an acknowledgement of the downlink channel in an uplink transmission,
wherein the set of symbols are within a channel occupancy of the serving cell,
wherein the channel occupancy of the serving cell is indicated by at least one of the followings: a downlink control information, DCI, format 2_0 or a semi-static channel occupancy.

8. The method of claim 7, wherein at least one of the following applies:
the downlink channel comprises a physical downlink shared channel, PDSCH;
the uplink transmission comprises a physical uplink control channel, PUCCH, transmission;
the downlink channel is configured in a new radio-based access to a unlicensed spectrum or shared spectrum; or
the uplink transmission is received in the new radio-based access to the unlicensed spectrum or shared spectrum.

9. The method of claim 8, wherein at least one of the following applies:
the PDSCH comprises a semi-persistent scheduled, SPS, PDSCH;
the acknowledgement of the downlink channel comprises a hybrid automatic repeat request-acknowledgement, HARQ-ACK, information corresponding to the PDSCH, the HARQ-ACK information comprising an ACK or a negative-acknowledgement, NACK; or
the PDSCH corresponds to a HARQ process number and a transport block.

10. The method of claim 9, wherein the acknowledgement of the downlink channel comprises the HARQ-ACK information corresponding to the PDSCH when a first condition is met.

11. The method of claim 10, wherein the first condition comprises at least of the followings: wherein the set of symbols are within the channel occupancy of the serving cell, the set of symbols are indicated as downlink, the UE is not configured to monitor the DCI format 2_0, the DCI format 2_0 excludes a first indication field, or the UE is configured with a second RRC parameter.

12. A user equipment, UE (10), comprising:
a memory;
a transceiver; and
a processor coupled to the memory and the transceiver;
wherein the processor is configured to perform, through the transceiver, the method of any one of claims 1-6.

13. A base station, comprising:
a memory;
a transceiver; and
a processor coupled to the memory and the transceiver;
wherein the processor is configured to perform, through the transceiver, the method of any one of claims 7-11.

## Patentansprüche

1. Verfahren zur drahtlosen Kommunikation, durchgeführt von einer Benutzerausrüstung, UE, **dadurch gekennzeichnet, dass** das Verfahren Folgendes umfasst:
(202) Konfiguriert-Sein durch eine Basisstation, einen Downlink-Kanal in einem Symbolsatz für eine bedienende Zell zu empfangen, und
(204) Melden einer Bestätigung des Downlink-Kanals in einer Uplink-Übertragung an die Basisstation,
wobei sich der Symbolsatz innerhalb einer Kanalbelegung der bedienenden Zell befindet,
wobei die Kanalbelegung der bedienenden Zelle durch mindestens eines der Folgenden angegeben wird: ein DCI-, Downlink-Control-Information-, Format 2_0 oder eine halbstatische Kanalbelegung.

2. Verfahren nach Anspruch 1, wobei mindestens eines des Folgenden gilt:
der Downlink-Kanal umfasst einen PDSCH, Physical Downlink Shared Channel,
die Uplink-Übertragung umfasst eine PUCCH-, Physical-Uplink-Control-Channel-, Übertragung,
der Downlink-Kanal wird in einem neuen funkbasierten Zugriff auf ein nicht lizensiertes Spektrum oder ein gemeinsam genutztes Spektrum konfiguriert, oder
die Uplink-Übertragung wird in dem neuen funkbasierten Zugriff auf das nicht lizensierte Spektrum oder das gemeinsam genutzte Spektrum gemeldet.

3. Verfahren nach Anspruch 2, wobei mindestens eines des Folgenden gilt:
der PDSCH umfasst einen halb-dauerhaften geplanten, semi-persistent scheduled, SPS, PDSCH,
die Bestätigung des Downlink-Kanals umfasst eine HARQ-ACK-, Hybrid-Automatic-Repeat-Request-Acknowledgement-, Information, die dem PDSCH entspricht, wobei die HARQ-ACK-Information eine Bestätigung, ACK, oder eine negative ACK, NACK umfasst, oder
der PDSCH entspricht einer HARQ-Prozesszahl oder einem Transportblock.

4. Verfahren nach einem der Ansprüche 1 bis 3, wobei mindestens eines des Folgenden gilt:
ein Angabefeld in dem DCI-Format 2_0 umfasst mindestens eines des Folgenden: einen Ressourcenblock-, RB-, Einstellungsindikator, einen SFI-, Slot-Format-Indicator-, Index, eine Kanalbelegungsdauer oder ein Suchraumeinstellungsgruppenschaltfeld, und das Angabefeld in dem DCI-Format 2_0 gibt die Kanalbelegung der bedienenden Zelle an, oder
die halb-statische Kanalbelegung gibt die Kanalbelegung der bedienenden Zelle an und wird durch einen ersten RRC-, Radio-Resource-Control-, Parameter konfiguriert.

5. Verfahren nach Anspruch 3, wobei die Bestätigung des Downlink-Kanals die HARQ-ACK-Information entsprechend dem PDSCH umfasst, wenn eine erste Bedingung erfüllt ist.

6. Verfahren nach Anspruch 5, wobei die erste Bedingung mindestens eines des Folgenden umfasst:
wobei der Symbolsatz innerhalb der Kanalbelegung der bedienenden Zelle liegt, der Symbolsatz als Downlink angegeben wird, die UE nicht dafür konfiguriert ist, das DCI-Format 2_0 zu überwachen, das DCI-Format 2_0 ein erstes Angabefeld ausschließt oder die UE mit einem zweiten RRC-Parameter konfiguriert wird.

7. Verfahren zur drahtlosen Kommunikation, ausgeführt von einer Basisstation, **dadurch gekennzeichnet, dass** das Verfahren Folgendes umfasst:
Übertragen eines Downlink-Kanals in einem Symbolsatz für eine bedienende Zell an eine Benutzerausrüstung, UE, und
Empfangen (304) einer Bestätigung des Downlink-Kanals in einer Uplink-Übertragung von der UE,
wobei sich der Symbolsatz innerhalb einer Kanalbelegung der bedienenden Zell befindet,
wobei die Kanalbelegung der bedienenden Zelle durch mindestens eines des Folgenden angegeben wird: ein DCI-, Downlink-Control-Information-, Format 2_0 oder eine halbstatische Kanalbelegung.

8. Verfahren nach Anspruch 7, wobei mindestens eines des Folgenden gilt:
der Downlink-Kanal umfasst einen PDSCH, Physical Downlink Shared Channel,
die Uplink-Übertragung umfasst eine PUCCH-, Physical-Uplink-Control-Channel-, Übertragung,
der Downlink-Kanal wird in einem neuen funkbasierten Zugriff auf ein nicht lizensiertes Spektrum oder ein gemeinsam genutztes Spektrum konfiguriert, oder
die Uplink-Übertragung wird in dem neuen funkbasierten Zugriff auf das nicht lizensierte Spektrum oder das gemeinsam genutzte Spektrum empfangen.

9. Verfahren nach Anspruch 8, wobei mindestens eines des Folgenden gilt:
der PDSCH umfasst einen halb-dauerhaften geplanten, semi-persistent scheduled, SPS, PDSCH,
die Bestätigung des Downlink-Kanals umfasst eine HARQ-ACK-, Hybrid-Automatic-Repeat-Request-Acknowledgement-, Information, die dem PDSCH entspricht, wobei die HARQ-ACK-Information eine Bestätigung, ACK, oder eine negative ACK, NACK, umfasst, oder
der PDSCH entspricht einer HARQ-Prozesszahl oder einem Transportblock.

10. Verfahren nach Anspruch 9, wobei die Bestätigung des Downlink-Kanals die HARQ-ACK-Information entsprechend dem PDSCH umfasst, wenn eine erste Bedingung erfüllt ist.

11. Verfahren nach Anspruch 10, wobei die erste Bedingung mindestens eines des Folgenden umfasst:
wobei der Symbolsatz innerhalb der Kanalbelegung der bedienenden Zelle liegt, der Symbolsatz als Downlink angegeben wird, die UE nicht dafür konfiguriert wird, das DCI-Format 2_0 zu überwachen, das DCI-Format 2_0 ein erstes Angabefeld ausschließt oder die UE mit einem zweiten RRC-Parameter konfiguriert wird.

12. Benutzerausrüstung, UE (10), Folgendes umfassend:
einen Speicher,
einen Sendeempfänger und
einen Prozessor, der mit dem Speicher und dem Sendeempfänger gekoppelt ist,
wobei der Prozessor dafür konfiguriert ist, durch den Sendeempfänger das Verfahren nach einem der Ansprüche 1 bis 6 durchzuführen.

13. Basisstation, Folgendes umfassend,
einen Speicher,
einen Sendeempfänger und
einen Prozessor, der mit dem Speicher und dem Sendeempfänger gekoppelt ist,
wobei der Prozessor dafür konfiguriert ist, durch den Sendeempfänger das Verfahren nach einem der Ansprüche 7 bis 11 durchzuführen.

## Revendications

1. Procédé de communication sans fil, exécuté par un équipement utilisateur, UE, **caractérisé en ce que** le procédé comprend :
(202) la configuration de l'UE, par une station de base, pour recevoir un canal de liaison descendante dans un ensemble de symboles pour une cellule de desserte ; et
(204), le signalement, à la station de base, d'un accusé de réception du canal de liaison descendante dans une transmission en liaison montante,
dans lequel l'ensemble de symboles se trouve à l'intérieur d'une occupation de canal de la cellule de desserte,
dans lequel l'occupation de canal de la cellule de desserte est indiquée par au moins l'un des éléments suivants : des informations de commande de liaison descendante, DCI, format 2_0 ou une occupation de canal semi-statique.

2. Procédé selon la revendication 1, dans lequel au moins l'un des éléments suivants s'applique :
le canal de liaison descendante comprend un canal physique partagé de liaison descendante, PDSCH ;
la transmission en liaison montante comprend une transmission de canal physique de commande de liaison montante, PUCCH ;
le canal de liaison descendante est configuré en un nouvel accès radio à un spectre sans licence ou un spectre partagé ; ou
la transmission en liaison montante est signalée dans le nouvel accès radio au spectre sans licence ou au spectre partagé.

3. Procédé selon la revendication 2, dans lequel au moins l'un des éléments suivants s'applique :
le PDSCH comprend un PDSCH programmé semi-persistant, SPS;
l'accusé de réception du canal de liaison descendante comprend des informations d'accusé de réception de demande de répétition automatique hybride, HARQ-ACK, correspondant au PDSCH, les informations HARQ-ACK comprenant un ACK ou un accusé de réception négatif, NACK ; ou
le PDSCH correspond à un numéro de processus HARQ et à un bloc de transport.

4. Procédé selon l'une quelconque des revendications 1 à 3, dans lequel au moins l'un des éléments suivants s'applique :
un champ d'indication en format DCI 2_0 comprend au moins l'un des éléments suivants : un indicateur d'ensemble de blocs de ressource, RB, un indice d'indicateur de format de créneau, SFI, une durée d'occupation de canal, ou un champ de commutation de groupe d'ensemble d'espaces de recherche, et le champ d'indication en format DCI 2_0 indique l'occupation de canal de la cellule de desserte ; ou
l'occupation de canal semi-statique indique l'occupation de canal de la cellule de desserte, et est configurée par un premier paramètre de commande de ressource radio, RRC.

5. Procédé selon la revendication 3, dans lequel l'accusé de réception du canal de liaison descendante comprend les informations HARQ-ACK correspondant au PDSCH lorsqu'une première condition est satisfaite.

6. Procédé selon la revendication 5, dans lequel la première condition comprend au moins l'un des éléments suivants :
l'ensemble de symboles se trouve dans l'occupation de canal de la cellule de desserte, l'ensemble de symboles est indiqué en tant que liaison descendante, l'UE n'est pas configuré pour surveiller le format DCI 2_0, le format DCI 2_0 exclut un premier champ d'indication, ou l'UE est configuré avec un second paramètre RRC.

7. Procédé de communication sans fil, exécuté par une station de base, **caractérisé en ce que** le procédé comprend :
la transmission d'un canal de liaison descendante dans un ensemble de symboles pour une cellule de desserte à un équipement utilisateur, UE ; et
la réception (304), depuis l'UE, d'un accusé de réception du canal de liaison descendante dans une transmission en liaison montante,
dans lequel l'ensemble de symboles se trouve à l'intérieur d'une occupation de canal de la cellule de desserte,
dans lequel l'occupation de canal de la cellule de desserte est indiquée par au moins l'un des éléments suivants : des informations de commande de liaison descendante, DCI, format 2_0 ou une occupation de canal semi-statique.

8. Procédé selon la revendication 7, dans lequel au moins l'un des éléments suivants s'applique :
le canal de liaison descendante comprend un canal physique partagé de liaison descendante, PDSCH ;
la transmission en liaison montante comprend une transmission de canal physique de commande de liaison montante, PUCCH ;
le canal de liaison descendante est configuré en un nouvel accès radio à un spectre sans licence ou un spectre partagé ; ou
la transmission en liaison montante est signalée dans le nouvel accès radio au spectre sans licence ou au spectre partagé.

9. Procédé selon la revendication 8, dans lequel au moins l'un des éléments suivants s'applique :
le PDSCH comprend un PDSCH programmé semi-persistant, SPS;
l'accusé de réception du canal de liaison descendante comprend des informations d'accusé de réception de demande de répétition automatique hybride, HARQ-ACK, correspondant au PDSCH, les informations HARQ-ACK comprenant un ACK ou un accusé de réception négatif, NACK ; ou
le PDSCH correspond à un numéro de processus HARQ et à un bloc de transport.

10. Procédé selon la revendication 9, dans lequel l'accusé de réception du canal de liaison descendante comprend les informations HARQ-ACK correspondant au PDSCH lorsqu'une première condition est satisfaite.

11. Procédé selon la revendication 10, dans lequel la première condition comprend au moins l'un des éléments suivants :
l'ensemble de symboles se trouve dans l'occupation de canal de la cellule de desserte, l'ensemble de symboles est indiqué en tant que liaison descendante, l'UE n'est pas configuré pour surveiller le format DCI 2_0, le format DCI 2_0 exclut un premier champ d'indication, ou l'UE est configuré avec un second paramètre RRC.

12. Equipement utilisateur, UE (10), comprenant :
une mémoire ;
un émetteur-récepteur ; et
un processeur couplé à la mémoire et à l'émetteur-récepteur ;
dans lequel le processeur est configuré pour exécuter, par l'intermédiaire de l'émetteur-récepteur, le procédé selon l'une quelconque des revendications 1 à 6.

13. Station de base, comprenant :
une mémoire ;
un émetteur-récepteur ; et
un processeur couplé à la mémoire et à l'émetteur-récepteur ;
dans lequel le processeur est configuré pour exécuter, par l'intermédiaire de l'émetteur-récepteur, le procédé selon l'une quelconque des revendications 7 à 11.
